# EUROPEAN PATENT APPLICATION

(11) **EP 2 947 307 A1**
(43) Date of publication of application: **25.11.2015**
(21) Application number: 14169698.9
(22) Date of filing: 23.05.2014
(51) Int. Cl.: F02M 59/44, F01L 1/14, F01L 1/46

(54) **Cam follower roller device with integrated sealing elements, notably for a fuel injection pump**

(71) Applicant: Aktiebolaget SKF, 415 50 Göteborg (SE)
(72) Inventor: MAFFUCCI, Julien, 37230 PERNAY (FR); HAUVESPRE, Benoit, 37390 METTRAY (FR); CHAMPALOU, François, 41150 CHAUMONT SUR LOIRE (FR)
(74) Representative: Casalonga

(57) **Abstract**

Cam follower roller device, notably for fuel injection pump of an internal combustion engine, comprises a casing (12), a shaft (14) mounted on the casing (12) and a roller (16) rotatably mounted on said shaft (14).

The cam follower device comprises at least one sealing element (30) arranged radially between the shaft (14) and the roller (16) and axially between the roller (16) and the casing (12).

## Description

The present invention relates to the field of mechanical cam follower roller devices for actuating a reciprocating movement used in automotive or industrial applications, such as fuel injection pumps, ICE valve timing systems, valve train cam followers or rocker arm bearings.

An advantageous application of the invention is the use of the cam follower roller device in a fuel injection pump intended for an internal combustion engine, notably of a motor vehicle.

Such a cam follower roller device generally comprises an outer sleeve or casing and a roller mounted on said casing and adapted to collaborate with a cam synchronized with the internal combustion engine camshaft so that the rotation of the camshaft leads to a periodic displacement of a piston of the pump which is in contact against the casing of the device. Patent application US2008/0190237 discloses such a conventional mechanical cam follower roller device.

With increasing demand on fuel efficiency, the pressure of the fuel pump has raised significantly last years. With a higher fuel pump pressure, the load applied on the cam follower device increases.

Moreover, automotive engine manufactures are looking for an oil-free operation. This means that the use of the lubricating oil shall be limited or even avoided for the cam follower device. Besides, when using a specific lubrication circuit to lubricate the cam follower device, time is necessary for the engine oil to reach the device. Accordingly, there will be a period of time without lubrication for the device. Furthermore, there is a need in reducing the oil pump size.

One aim of the present invention is to overcome these drawbacks.

It is a particular object of the present invention to provide a cam follower roller device, notably for a fuel injection pump, with improved lubrication allowing the quantity of lubricant to be reduced as well as the size of the oil pump.

Another object of the present invention is to provide a cam follower roller device which has an increased service life by avoiding pollution to enter inside the cam follower device.

In one embodiment, the cam follower roller device, notably for fuel injection pump of an internal combustion engine, comprises a casing or tappet, a shaft or pin mounted on the casing and a roller rotatably mounted on said shaft.

The cam follower device comprises at least one sealing element arranged radially between the shaft and the roller and axially between the roller and the casing.

In one embodiment, the sealing element is arranged radially between an outer cylindrical surface of the shaft and an axial surface of a groove provided on the roller and axially between a radial surface of said groove and the casing.

In one embodiment, the sealing element comprises a radial portion fixed on roller and two sealing lips extending from the radial portion obliquely towards the shaft and in radial contact with the outer surface of the shaft.

In one embodiment, the sealing element comprises a radial portion fixed on the outer surface of the shaft and two sealing lips extending from the radial portion obliquely towards the roller and in radial contact with the axial surface of the groove of the roller.

In one embodiment, the sealing element comprises a radial portion fixed on the casing and two sealing lips extending from the radial portion axially towards there roller, at least one of the lips being in radial contact with the roller.

The sealing element may be annular.

Advantageously, the cam follower device comprises two sealing element, each located on a side of the roller and create each a sealed axial chamber with the roller, which may define a tank for lubricant, for example grease.

The sealing element may be, for example, formed of a flexible synthetic material.

The present invention and its advantages will be better understood by studying the detailed description of specific embodiments given by way of non-limiting examples and illustrated by the appended drawings on which
- Figure 1 is a cross-section of a cam follower roller device according to first embodiment of the invention;
- Figure 1a is detail view of the cam follower roller device of Figure 1;
- Figure 2 is a cross-section of a cam follower roller device according to second embodiment of the invention;
- Figure 2a is detail view of the cam follower roller device of Figure 2;
- Figure 3 is a cross-section of a cam follower roller device according to third embodiment of the invention; and
- Figure 3a is detail view of the cam follower roller device of Figure 3.

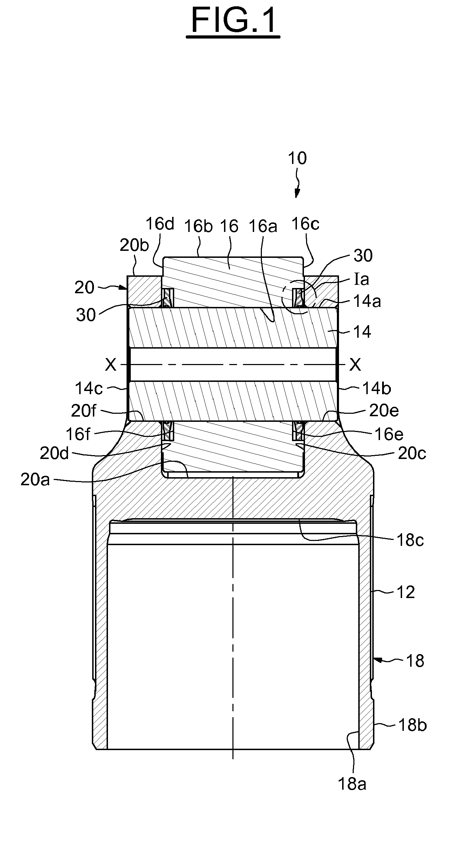

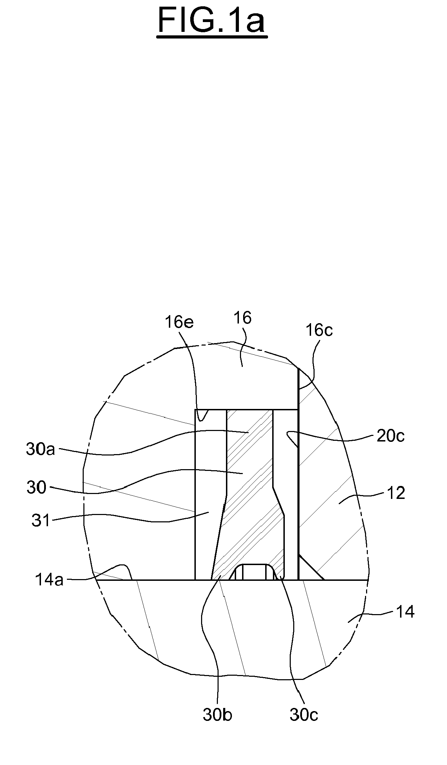

A first embodiment of a mechanical cam follower roller device 10 is illustrated on Figures 1 and 1a, said device may for example be used in a fuel injection pump intended for an internal combustion engine. The device 10 may be used in other applications, for example in a rocker system adapted to control the valves of an internal combustion engine.

The device 10 comprises an outer casing or tappet body 12, a pin or shaft 14 extending along an axis X-X and mounted on the casing, and a roller 16 supported on the shaft 14 and adapted to press against a cam (not shown) synchronized with the internal combustion engine camshaft or directly against a cam of the said camshaft.

The outer casing 12 has a tubular form and may be made of stamped metal sheet. The outer casing 12 comprises a first end 18 and a second end 20 opposite to the first end 18.

The first end 18 comprises an outwardly opened recess 18a designed to cooperate with a pump piston (not shown) delimited by a two lateral walls 18b and a flat seat 18c forming a stroke-transmission plate for the piston head (not shown). The second end 20 comprises an outwardly opened recess 20a inside which the roller 16 is mounted.

The roller 16 has a bore 16a of cylindrical shape rotatably mounted on an outer cylindrical surface 14a of the shaft 14. The bore 16a of the roller 16 is radially in direct contact with the outer surface 14a of the shaft 14. The roller 16 radially projects from the outer surface 20b of the second end 20 of the casing 12. The roller 16 comprises an outer cylindrical surface 16b forming the rolling surface delimited by two parallel lateral radial surfaces 16c, 16d perpendicular to the roller rotational axis X-X.

The lateral surfaces 16c, 16d of the roller come axially into contact with flat sections 20c, 20d formed on the inner surface of the second end 20 of the casing 12.

As illustrated, the shaft 14 axially project out of the roller 16 with two ends 14b, 14c. Each end 14b, 14c is supported in through-holes 20e, 20f formed on the second end 20 of the casing 12 and facing on another, in the region of the flat sections 20c, 20d. The shaft 14 may be, for example, axially maintained in said through-holes 20e, 20f by means of a washer (not shown) radially mounted inside each through-hole 20e, 20f. Alternatively, the shaft 14 may be fixed to the casing by push-fitting in said through-holes 20e, 20f. Alternatively, the shaft 14 may be fixed to the casing 12 by any other appropriate means.

The cam follower device 10 further comprises on each side of the roller 16, an annular sealing element 30 in order to create a sealed axial chamber 31 which may define a tank for grease. Each sealing element 30 is arranged radially between the outer cylindrical surface 14a of the shaft and an axial surface (not depicted) of a groove 16e, 16f provided on the lateral surface 16c, 16d of the roller 16, and axially between a radial surface (not depicted) of the groove 16e 16f and the flat sections 20c, 20d of the casing 12. As illustrated, the sealing element 30 is not in axial contact with the casing 12.

As illustrated on figures 1 and 1a, each sealing element 30 comprises a radial portion 30a fixed on the axial surface of the groove 16e, 16f of the roller 16, and two sealing lips 30b, 30c extending from the radial portion 30a obliquely towards the shaft 14 and in radial contact with the outer surface 14a of the shaft 14. As illustrated, one sealing lip 30b has a greater axial contact surface with the shaft than the other sealing lip 30c. The function of the sealing lip 30b is primarily to avoid the passage of solid particles such as dust, whereas the function of the sealing lip 30c is primarily to avoid the passage of lubricant.

The two sealing lips 30b, 30c apply a dynamic sealing with the outer surface 14a of the shaft 14. "Dynamic sealing" means the sealing made between two parts that move relative to one another.

Each sealing element 30 is formed of a flexible synthetic material, for example made of nitrile, polyamide, polytetrafluoroethylene or elastomere such as synthetic rubber. Advantageously, the sealing element 30 may be overmoulded on the roller 16 by overmoulding or even by bi-injection. Alternatively, the sealing element 30 may be fixed onto the roller 16 by any appropriate means, for example by gluing, vulcanization, clipping etc. The sealing element 30 rigidly coupled to the roller 16 enables to obtain a unitary sealing subassembly.

Thanks to the interposition of the sealing element 30 in a groove of the roller 16, the cam follower device 10 has good sealing properties with prevention of the intrusion of pollutant particles between the shaft 14 and the roller 16.

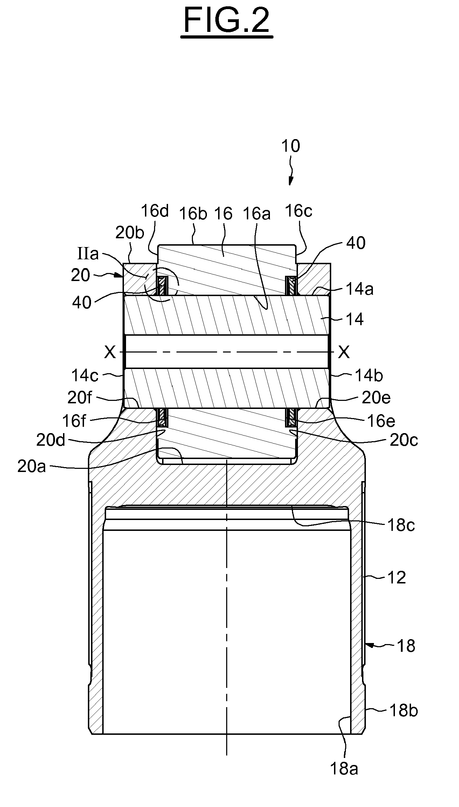

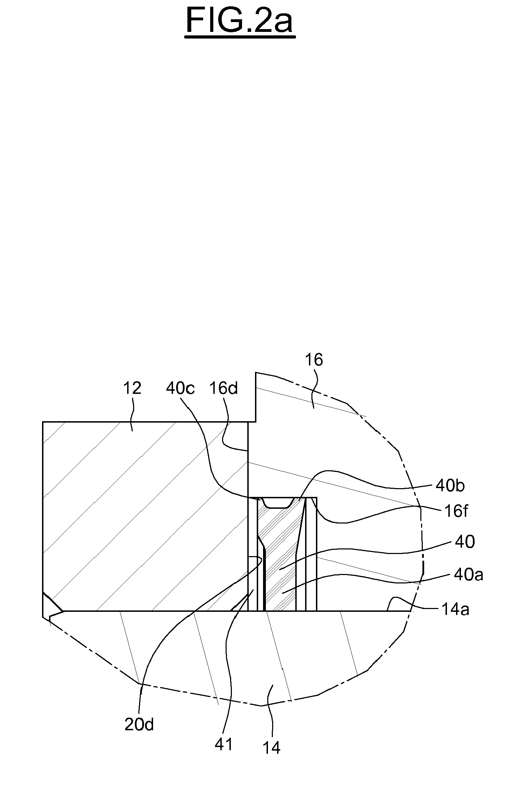

The embodiment shown on Figures 2 and 2a, in which identical parts are given identical references, differs from the previous embodiment in that the cam follower device 10 further comprises on each side of the roller 16, an annular sealing element 40 in order to create a sealed axial chamber 41 which may define a tank for grease. Each sealing element 40 is arranged radially between the outer cylindrical surface 14a of the shaft and an axial surface (not depicted) of a groove 16e, 16f provided on the lateral surface 16c, 16d of the roller 16, and axially between a radial surface (not depicted) of the groove 16e 16f and the flat sections 20c, 20d of the casing 12. As illustrated, the sealing element 40 is not in axial contact with the casing 12.

As illustrated on figures 2 and 2a, each sealing element 40 comprises a radial portion 40a fixed on the outer surface 14a of the shaft 14 and two sealing lips 40b, 40c extending from the radial portion 40a obliquely towards the roller 16 and in radial contact with the axial surface (not depicted) of the groove 16e, 16f of the roller 16. As illustrated, one sealing lip 40b has a greater axial contact surface with the shaft than the other sealing lip 40c. The two sealing lips 40b, 40c apply a dynamic sealing with the roller 16. "Dynamic sealing" means the sealing made between two parts that move relative to one another.

Each sealing element 40 is formed of a flexible synthetic material, for example made of nitrile, polyamide, polytetrafluoroethylene or elastomere such as synthetic rubber. Advantageously, the sealing element 40 may be overmoulded on the shaft 14 by overmoulding or even by bi-injection. Alternatively, the sealing element 40 may be fixed onto the shaft 14 by any appropriate means, for example by gluing, vulcanization, clipping, force fitting etc.

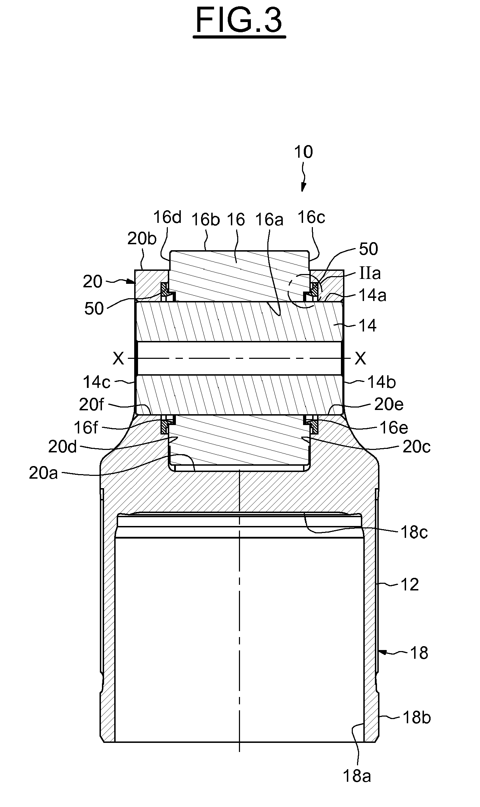

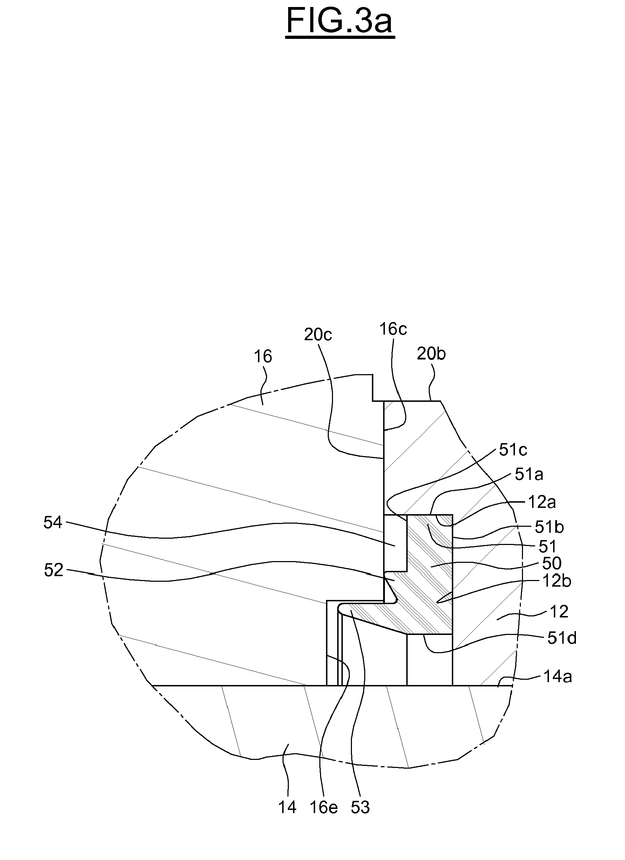

The embodiment shown on Figures 3 and 3a, in which identical parts are given identical references, differs from the previous embodiment in that the cam follower device 10 further comprises on each side of the roller 16, an annular sealing element 50 in order to create a sealed axial chamber 54 which may define a tank for grease.

Each sealing element 50 comprises a radial portion 51 arranged radially between a groove provided on the flat sections 20c, 20d of the casing 12 and the outer surface 14a of the shaft 14.

The radial portion 51 of the sealing element 50 comprises an upper axial surface 51a in radial contact with an axial surface 12a of the groove provided on the casing 12 and a first lateral radial surface 51b in axial contact with a radial surface 12b of the groove provided on the casing 12.

Each sealing element 50 comprises a first sealing lip 52 extending axially from a second lateral surface 51c of the radial portion 51, opposed to the first lateral surface 51b, towards the roller 16. Said first sealing lip 52 is in axial contact with the lateral radial surface 16c, 16d of the roller 16 and closes the axial chamber 54.

Each sealing element 50 further comprises a second sealing lip 53 extending axially from an inner radial surface 51d of the radial portion 51, opposed to the upper radial 5 1 a, towards the roller 16. Said second sealing lip 53 provides a labyrinth seal with the axial surface of the groove 16e, 16f provided on the roller 16. In other words, second sealing lip 53 is not in contact with the roller 16.

Each sealing element 50 is formed of a flexible synthetic material, for example made of nitrile, polyamide, polytetrafluoroethylene or elastomere such as synthetic rubber. Advantageously, the sealing element 50 may be overmoulded on the casing 12 by overmoulding or even by bi-injection. Alternatively, the sealing element 50 may be fixed onto the casing 12 by any appropriate means, for example by gluing, vulcanization, clipping, force fitting etc.

Thanks to the sealing means located at each end of the roller, the lubrication is improved inside the cam follower device, allowing the quantity of lubricant to be reduced as well as the size of the oil pump. Indeed, the cam follower device is thus lubricated for life.

Such sealing means allow the use of grease, for example, the same grease as used inside gearboxes, or lubricant with low viscosity in order to decrease friction between the roller and the shaft.

The service life of the cam follower roller device is enhanced even under highly loaded conditions, by avoiding pollution to enter inside the cam follower device.

The cam follower roller device according to the invention can be used with a camshaft, a crankshaft or a balancing shaft.

## Claims

1. Cam follower roller device, notably for fuel injection pump of an internal combustion engine, comprises a casing (12), a shaft (14) mounted on the casing (12) and a roller (16) rotatably mounted on said shaft (14), **characterized in that** the cam follower device comprises at least one sealing element (30, 40, 50) arranged radially between the shaft (14) and the roller (16) and axially between the roller (16) and the casing (12).

2. Cam follower roller device according to claim 1, in which the sealing element (30, 40) is arranged radially between an outer cylindrical surface (14a) of the shaft (14) and an axial surface of a groove (16e, 16f) provided on the roller (16), and axially between a radial surface of said groove (16e, 16f) and the casing (12).

3. Cam follower roller device according to claim 1 or 2, in which the sealing element (30) comprises a radial portion (30a) fixed on roller (16) and two sealing lips (30b, 30c) extending from the radial portion (30a) obliquely towards the shaft (14) and in radial contact with the outer surface (14a) of the shaft (14).

4. Cam follower roller device according to claim 1 or 2, in which the sealing element (40) comprises a radial portion (40a) fixed on the outer surface (14a) of the shaft (14) and two sealing lips (40b, 40c) extending from the radial portion (40a) obliquely towards the roller (16) and in radial contact with the axial surface of the groove (16e, 16f) of the roller (16).

5. Cam follower roller device according to claim 1, in which the sealing element (50) comprises a radial portion (51) fixed on the casing (12) and two sealing lips (52, 53) extending from the radial portion (51) axially towards there roller (16), at least one of the lips (52) being in axial contact with the roller (16).

6. Cam follower roller device according to any of the preceding claims, in which the sealing element (30, 40, 50) is annular.

7. Cam follower roller device according to any of the preceding claims, comprising two sealing element (30, 40, 50), each located on a side of the roller (16).

8. Cam follower roller device according to claim 7, in which the sealing elements (30, 40, 50) create a sealed axial chamber (31, 41) with the roller (16).

9. Cam follower roller device according to claim 8, in which the sealed axial chamber (31, 41, 54) defines a tank for lubricant.

10. Cam follower roller device according to any of the preceding claims, in which the sealing element (30, 40, 50) is formed of a flexible synthetic material.
